(19) 

**Europäisches Patentamt**
**European Patent Office**
**Office européen des brevets**

(11) **EP 3 299 990 A1**

(12) **EUROPEAN PATENT APPLICATION**

(43) Date of publication:
**28.03.2018  Bulletin 2018/13**

(51) Int Cl.:
*G06F 21/62* (2013.01)   *H04L 9/08* (2006.01)
*H04L 29/06* (2006.01)   *H04L 9/32* (2006.01)

(21) Application number: **17192729.6**

(22) Date of filing: **22.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.09.2016  TW 105131163**

(71) Applicant: **Synology Incorporated Taipei 103 (TW)**

(72) Inventors:
• **Lin, Hung-Yu**
  **114 Taipei City (TW)**
• **Wang, Yu-Hsin**
  **Puzi City 613 (TW)**
• **Huang, Chih-Kuang**
  **Kaohsiung City (TW)**

(74) Representative: **Nederlandsch Octrooibureau P.O. Box 29720 2502 LS The Hague (NL)**

(54) **ELECTRONIC DEVICE SERVER AND METHOD FOR COMMUNICATING WITH SERVER**

(57)    An electronic device, server, and communication system are disclosed. The electronic device includes a processor and a storage medium. The storage medium is configured to store a plurality of instructions to allow the processor to generate a public key and a private key, to encrypt the private key, and to send the public key and the encrypted private key through a network to a server for storage. The electronic device is configured to receive the public key and the encrypted private key from the server based on a predetermined storing policy and to decrypt the encrypted private key to obtain the private key.

_10_

Fig. 1

EP 3 299 990 A1

## Description

## BACKGROUND

### Field of Invention

The present disclosure relates to an electronic device and a method for communicating with a server. More particularly, the present disclosure relates to an electronic device and a method for communicating with a server through a network.

### Description of Related Art

Generally speaking, a user can interact with other users through communication software, for example, LINE, WhatsApp, Messenger, and the like. The communication software can provide real-time interactive functions between users through end-to-end encryption (E2EE) technologies so that dialog information, pictures, or videos can be transmitted securely and so that VoIP (Voice over Internet Protocol) can be made between electronic devices. In addition, with the development of the mobile communication industry, the communication software can further be implemented as a mobile application or a web application, which allows users to log in to the communication software on different devices and use functions of the communication software. However, this may pose a security issue when a user uses various devices to transmit her personal information. Given the fact that communication software has become a popular communication tool in recent years and personal and private information are transmitted through the communication software all the time, there is a need to provide a secure communication method to ensure privacy for users.

### BRIEF DESCRIPTION OF THE DRAWINGS

For a more complete understanding of the present disclosure, and the advantages thereof, reference is now made to the following descriptions taken in conjunction with the accompanying drawings, in which:

Fig. 1 shows a network environment in which a communication system can operate in accordance with an embodiment of the disclosure;
Fig. 2 is an example of an architecture of a server in accordance with an embodiment of the disclosure;
Fig. 3 is a block diagram of an electronic device in accordance with an embodiment of the disclosure;
Fig. 4 shows registration steps of a communication method in accordance with an embodiment of the disclosure;
Fig. 5 shows login steps of a communication method in accordance with an embodiment of the disclosure;
Fig. 6 shows a communication method in accordance with an embodiment of the disclosure;

Fig. 7 shows a communication method in accordance with an embodiment of the disclosure; and
Fig. 8 shows an operation interface in accordance with an embodiment of the disclosure.

## DESCRIPTION OF THE EMBODIMENTS

Aspects of the present disclosure will now be described more fully with reference to the accompanying drawings, in which exemplary embodiments of the invention are shown.

Generally speaking, after communication software is installed on a cell phone (or other portable electronic device), the communication software can protect information through an end-to-end encryption (E2EE). For example, text information and position information in the communication software can be directly encrypted on a user's cell phone. Hence, a private key of the user does not need to be transmitted in a network, only two parties participating in a dialog can encrypt and decrypt each other's information, and any third party is not able to decrypt and view the information.

In addition, the communication software may present a dialog box through a web page and provide various dialog functions. For example, the user can utilize a public computer to open a browser and input an account number and a password of the user on a web page of the communication software to log in to the communication software.

However, implementations of communication software for the browser and the cell phone are different. When the cell phone downloads a mobile version of the communication software (e.g. a native application for iOS system), a storage space will be allocated to the native application to store some sensitive information (e.g. a user account, a user password, a private key) generated or required by the native application. Conversely, when a web version of the communication software (e.g. a web application) is opened in the browser, a device (e.g. a personal computer a laptop) may not allocate a storage space to the browser to store user's sensitive information (e.g. a user account, a user password, a private key) generated or required by the web application. The reason that the web application may not store user's private and sensitive information is because the user may use different devices (such as a public computer in a library or in an airport) to log in to the web application. There may be a security issue if the web application stores user's personal or sensitive information.

In some scenarios, when there is no secure and liable way to store user's information, a third-party device (such as a cell phone belonging to the user) may be used to verify the user's information. For example, the user may be required to input a verification code on her cell phone when logging in to the web version of the communication software. The user is allowed to log in the account to the communication software only if a back-end server determines that the verification code from the cell phone is correct. Afterwards, the user may need to perform the same steps over and over again whenever she needs to log in to the web version of communication software. In another example, when the user logs in to the web version of the communication software, a two-dimensional code (such as a Quick Response Code, a QR code) will be displayed on a login page of the communication software. The user needs to use a third-party device (such as a cell phone that the user has already logged in to the communication software) to scan the two-dimensional code and then the user can successfully log in to the web version of the communication software. The same operations may need to be performed again for the next login. These annoying and repetitive operations cause significant inconvenience to the user.

Hence, the following embodiments provide an electronic device, a server, a communication system, and a communication method that can securely store an encrypted private key associated with the user in the server. The user can obtain the encrypted private key corresponding to the account number associated with the user from the server when the user logs in to the communication software regardless of the devices the user uses to execute the service. Secure end-to-end encryption (E2EE) communication channels are therefore established with other electronic devices utilized by other users by using the private key and a corresponding public key, to securely transmit the information. The above features and aspects will be described in greater detail below.

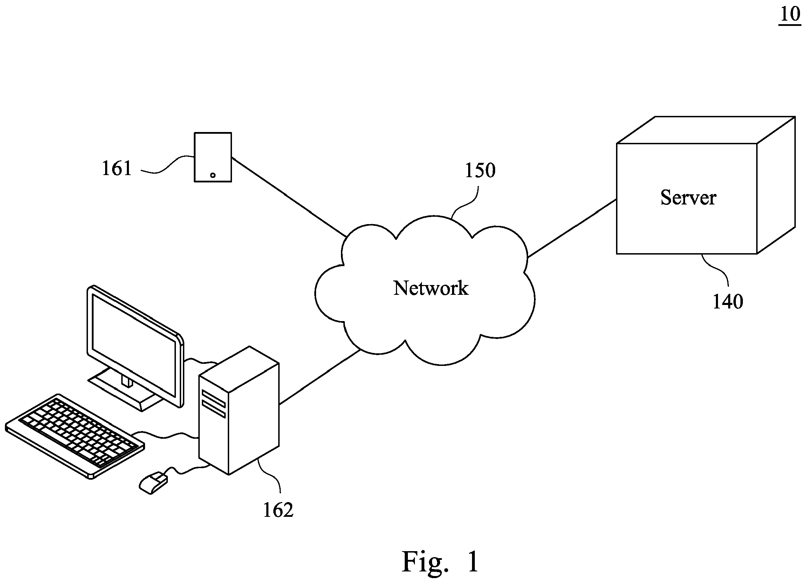

Fig. 1 shows a network environment 10 in which a communication system can operate in accordance with an embodiment of the disclosure. The various embodiments of the present disclosure are not limited to the network environment 10. As illustrated, the network environment 10 includes a server 140, which can implement the communication technology introduced in the present disclosure. In an embodiment, the server 140 may be a multi-functional network attached storage (NAS) server, which may include the functions of a web server, an online communication server, etc. In other embodiments, the server 140 may be a computer server with a network function. The server 140 may be coupled to one or more client devices 161, 162 through a network 150, such as a local area network (LAN), a wide area network (WAN), or other types of networks, which may be wired or wireless. Each of the client devices 161, 162 may be, for example, a personal computer (PC), a smartphone, or any portable electronic device that can install browsers or communication applications.

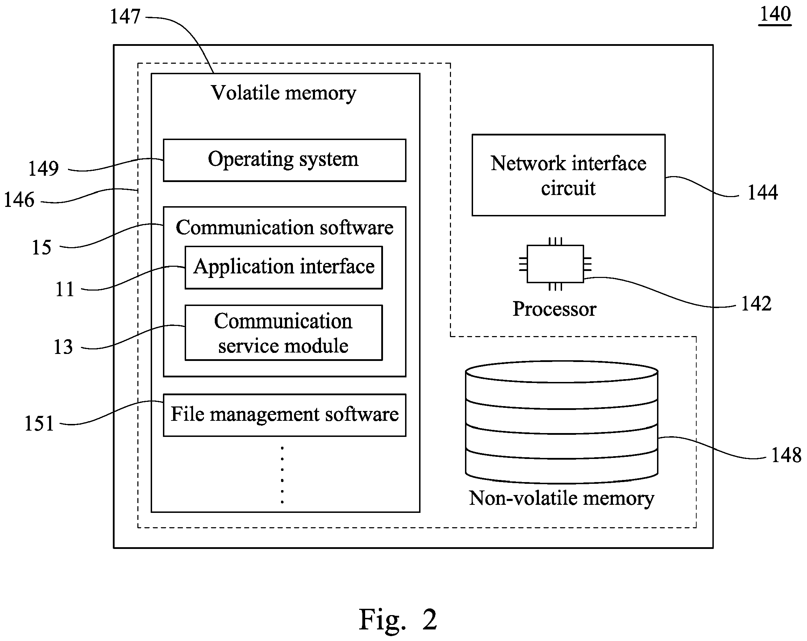

Fig. 2 is an example of an architecture of the server 140 in accordance with an embodiment of the disclosure. The server 140 can be a storage server, which includes one or more processors 142 and a storage medium 146. The processors 142 may execute instructions stored in the storage medium 146. The processors 142 can be configured to process various operations, and may be implemented as integrated circuits, such as a microcontroller, a microprocessor, a digital signal processor, an application specific integrated circuit (ASIC), or a logic circuit.

The storage medium 146 may store software programs, such as a web application program, specifically, a communication software that can be opened by a browser. As mentioned, "software" may refer to sequences of instructions that, when executed by the processor 146, cause the server 140 to perform various operations and to complete related functions, such as a communication function.

The storage medium 146 may include various storage devices, such as a temporary memory device and a permanent memory device. The temporary memory device may be a volatile memory 147, such as a dynamic random access memory, which may store program modules and data that the server 140 needs at runtime (such as an operating system 149), or which can store some applications that can be opened by a user (such as a communication application 15). The permanent storage device may be a non-volatile memory 148, such as a flash memory, a floppy disk, a hard disk (HDD), a solid state disk (SSD), which can store a variety of electronic files, for example, a web page, a document, an application program and the like.

The server 140 may further include a network interface circuit 144, which can facilitate network communication. In some embodiments, the network interface circuit 144 may include transceiver components for accessing network data. In an embodiment, the network interface circuit 144 may provide wired and/or wireless network capability. In practice, the network interface circuit 144 may be implemented using a combination of hardware, such as antennas, modulators/demodulators and signal processing circuits.

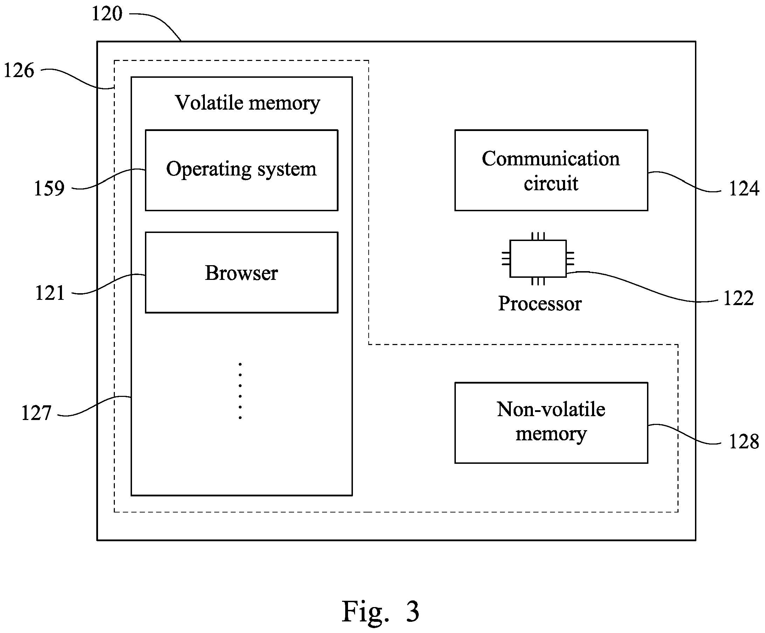

Fig. 3 is a block diagram of the electronic device 120 in accordance with an embodiment of the disclosure. The electronic device 120 may be an example of the client devices 161, 162 shown in Fig. 1. The electronic device 120 may be a smartphone, a personal computer, a tablet computer, or any electronic device that can install a browser or communication software. The electronic device 120 includes a processor 122, a communication circuit 124, and a storage medium 126. The storage medium 126 stores various instructions. The processor 122 is coupled to the communication circuit 124 and the storage module 126. In an embodiment, the electronic device 120 may further include an input interface (such as a keyboard, a mouse, a microphone, a touch panel, and the like).

The processor 122 processes a variety of operations. The processor 122 may be implemented as an integrated circuit, such as a microcontroller, a microprocessor, a digital signal processor, an application specific integrated circuit (ASIC) or a logic circuit. The communication circuit 124 is configured to establish a communication link to the server 140. For example, the communication circuit 124 may be one or a combination of a 2G, 3G, or 4G wireless network communication circuit, a Wi-Fi wireless communication circuit, a Bluetooth wireless communication circuit, an Ethernet wired network communication circuit or the like.

The storage medium 126 may include various storage devices, such as a temporary memory device and a permanent memory device. The temporary memory device may be a volatile memory 127, such as a dynamic random access memory, which may store program modules and data that the electronic device 120 needs at runtime (such as an operating system 159), or which can store applications that can be opened by a user (such as a browser 121). The permanent storage device may be a non-volatile memory 128, such as a flash memory (used in mobile devices), a hard disk or a solid state disk (used in personal computers). The permanent memory device can store a variety of electronic files, for example, a web page, a document, an application program, and other suitable electronic files.

Referring now to Fig. 1 to Fig. 3, the electronic device 120 may have the browser 121 installed therein. In an embodiment, the electronic device 120 may be used to log in to the server 140 through the browser 121, and web applications may be opened in the browser 121, such as the communication software 15. The communication software 15 may include an application interface 11 and a communication service module 13. The application interface 11 is configured to communicate with the application program at a client device, such as the web application opened in the browser 121. The communication service module 13 is configured to provide network communication services between the server 140 and the electronic device 120. In the following embodiments, greater detail regarding "the operations to log in to the server 140 by using the browser 121 to perform an end-to-end communication" is provided.

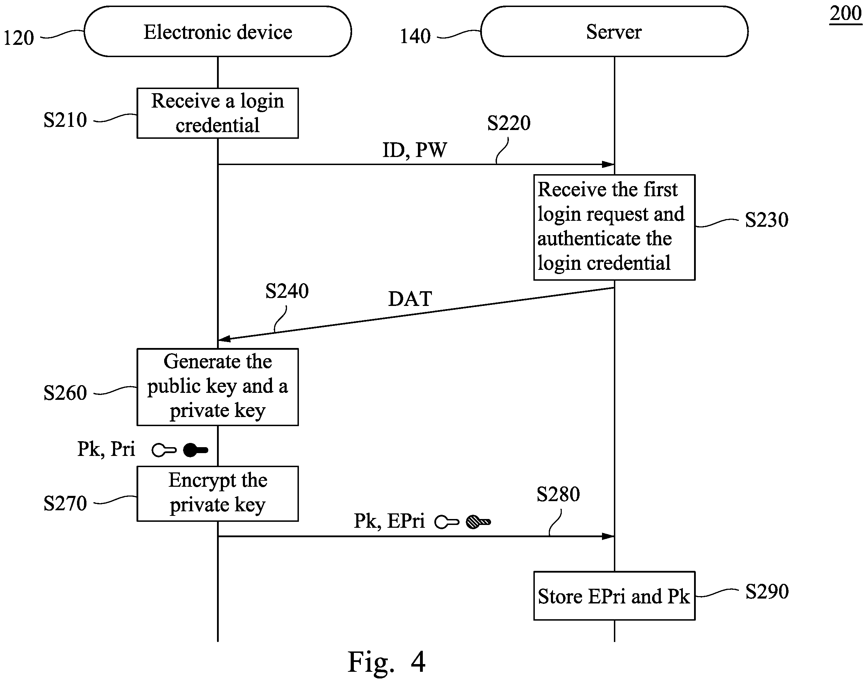

Fig. 4 shows registration steps S210-S290 of the communication method 200 in accordance with an embodiment of the disclosure. First, the server 140 needs to authenticate an identity of a user of the electronic device 120. In step S210, the processor 122 of the electronic device 120 receives a login credential. In an embodiment, the login credential may include a user name ID (or a user account number) and a user password PW. The user can input the user name ID and the user password PW owned by herself through an input interface of the electronic device 120. For example, the user browses a login interface of communication software on a browser through the electronic device 120, and inputs the user name ID and the user password PW on the login interface to send a first login request.

In step S220, the processor 122 of the electronic device 120 sends the login credential to the server 140 through the communication circuit 124, for example, sends the login credential in a method satisfying various communication protocols, such as 2G, 3G, 4G, Wi-Fi, Bluetooth, Ethernet, and the like.

In step S230, the processor 142 in the server 140 receives the first login request from the electronic device 120 through the communication circuit 144, and authenticates the login credential sent from the electronic device 120 corresponding to the first login request. For example, the processor 142 can compare the user name ID and the user password PW currently received with a known user name and a known user password, respectively, stored in the storage medium 146 to determine whether they match or not. If they match, authentication of the login credential is determined to be correct and the process proceeds to step S240. If they do not match, login failure information is transmitted to the electronic device 120 and the process is ended.

The server 140 may include various software (such as the communication software 15, the file management software 151). In an embodiment, the user can select one of the software applications through the browser to log in. When the processor 142 determines that the login credential is correct, the processor 142 will execute the application software selected by the user, for example, the communication software 15. In another embodiment, the user may first log in to a management interface of the server 140 through the browser, and then select a software application to be executed through the management interface.

In step S240, the processor 142 of the server 140 sends confirmation data DAT to the electronic device 120 through the communication circuit 144. In an embodiment, when the processor 142 of the server 140 determines that the login credential is correct, the processor 142 will further determine whether or not an encrypted private key EPri corresponding to the login credential exists in the storage medium 146, and generate the confirmation data DAT. For example, when the processor 142 determines that the encrypted private key EPri corresponding to the login credential does not exist in the storage medium 146, the processor 142 sends the confirmation data DAT to the electronic device 120 through the communication circuit 144 indicating that the public key Pk and the encrypted private key EPri do not exist in the server 140.

Specifically, the confirmation data DAT includes information indicating whether or not the server 140 has a public key Pk and the encrypted private key EPri. If the information of the confirmation data DAT indicate that the public key Pk and the encrypted private key EPri do not exist in the server 140, the electronic device 120 will continue to execute steps S260 to S270 and generate a public key Pk and a private key Pri in step S260. Conversely, if the confirmation data DAT indicates that the public key Pk and the encrypted private key EPri exist in the server 140, it means that the user has completed registration and the process is ended.

Since, in the following steps, the electronic device 120 needs to generate the public key Pk and the private key Pri through a password, the electronic device 120 may be further configured to receive the password inputted by the user. It is noted that the password described here may refer to the user password PW or a passphrase otherwise set by the user.

In step S260, the processor 122 of the electronic device 120 generates the public key Pk and the private key Pri. In an embodiment, the processor 122 may use the RSA algorithm, the X22519 algorithm, the digital signature algorithm (DSA), or other known asymmetric-key algorithms to generate the public key Pk and the private key Pri.

In step S270, the processor 122 can encrypt the private key Pri through the password (for example, through the user password or the passphrase different than the user password). In an embodiment, the processor 122 substitutes the user password with a one-way hash algorithm to generate a secrete key, and substitutes the secrete key and the private key Pri with a symmetric-key algorithm to generate the encrypted private key EPri. In another embodiment, the communication software 15 of the server 140 can provide a function of passphrase setting. The user may additionally set the passphrase to allow the processor 122 of the electronic device 120 to substitute the passphrase with a one-way hash algorithm to generate a secrete key, and substitute the secrete key and the private key Pri with a symmetric-key algorithm to generate the encrypted private key EPri.

In various embodiments, since the one-way hash algorithm has a unidirectional nature, the secrete key generated through substituting the password with the one-way hash algorithm by the processor 122 cannot be recovered. In other words, even if the third party obtains the secrete key, the password cannot be recovered through substituting the secrete key with the one-way hash algorithm or other algorithms. Only the user who owns the correct password can substitute the password (such as the user password or the passphrase) with the one-way hash algorithm to obtain the same secrete key. In this manner, it can be ensured that only the user owning the correct password can generate the same key. Hence, the security of the communication system 100 is significantly increased by using the one-way hash algorithm to generate the secrete key.

Generally, the password inputted by the user is about 8 to 10 characters. After the password is substituted with the one-way hash algorithm, the secrete key with 30 to 40 characters may be obtained. Since the secrete key has a great number of characters and is a string of code having a high randomness, the password strength of the user can be enhanced through the one-way hash algorithm.

In an embodiment, the user can input the passphrase through the web page. The processor 122 substitutes the passphrase inputted by the user with the one-way hash algorithm to generate the encrypted private key EPri. In the present example, the user name ID and the user password PW set by the user are only used for logging in or registration. The user password PW is not used to generate the secrete key, and instead the passphrase inputted by the user is used to generate the secrete key. That is, if the passphrase inputted by the user is "12345678", then the passphrase "12345678" is substituted with the one-way hash algorithm to generate the encrypted private key EPri.

In another embodiment, the processor 122 can substitute the password and the random numbers (such as adding a random salt value) with the one-way hash algorithm to generate the secrete key, thus further increasing the randomness and obtaining a more secure secrete key. In the present embodiment, the random numbers are not hidden information. The random numbers may be stored together with information that have been processed by the one-way encryption algorithm, or may be stored in some other place in an expressive way. When the user sets the password, the system will allocate the random numbers to the user. The random numbers will be inserted at a fixed position in the password. When the same user logs in the next time, the user will still obtain the same random numbers, and the random numbers will still be inserted at the same position in the password. In addition, since each user has his own corresponding random numbers, a malicious third party, even if it obtains keys of multiple users, can only break the secrete key of each individual user one by one, and cannot break the secrete keys of the other users after the secrete key of one of the users is broken.

In step S280, the processor 120 sends the public key Pk and the encrypted private key EPri to the server 140 by the communication circuit 124 through the network 150. In an embodiment, the server 140 may have already stored a plurality of the public keys Pk and the encrypted private keys EPri that belong to other users. As a result, the process of step S280 may be regarded as an embodiment of sending a public key and an encrypted private key to the storage medium 146 for storage when a new user completes the registration process.

It is known from steps S270 and S280 that the private key Pri is encrypted by using the user password PW or the passphrase and is then stored in the storage medium 146 of the server 140. Hence, the selection of the encryption algorithm is important for increasing the security of a transmission process. However, the encryption algorithm may vary depending on implementation environments. In various embodiments, the encryption algorithm used for encrypting the public key may adopt the S25519 algorithm. The encryption algorithm used for encrypting the private key may adopt the XSalsa20 algorithm. Assume that the user password is 11 characters containing uppercase or lowercase English and numbers. If all the keys are stored, the breaking complexity is about $2^{64}$. If all the keys are not stored, the breaking complexity is about $2^{125}(\sqrt{2}-1)$. These complexities are not within the scale in which breaking is easily achieved in the field of information security.

In step S290, the server 140 stores the public key Pk and the encrypted private key EPri in the storage medium 146.

Through the above steps S210 to S290, the public key Pk and the encrypted private key EPri of the user can be stored in the server 140 in the user registration steps. When the user logs in to the communication software through other electronic devices (such as a public computer), the encrypted private key Epri can be obtained from the server 140, and the secrete key is generated again by inputting the password through the input interface (not shown in the figure), and then decryption is performed through the secrete key to obtain the private key Pri.

In steps S210 to S290 of Fig. 2, the user does not need to transmit an unencrypted private key through the network. As a result, the risk that the private key Pri is stolen during the transmission process can be avoided. Even if the encrypted private key EPri leaks, without knowing the secret key, the other persons still cannot easily break the encrypted private key Epri and obtain an original content of the private key Pri.

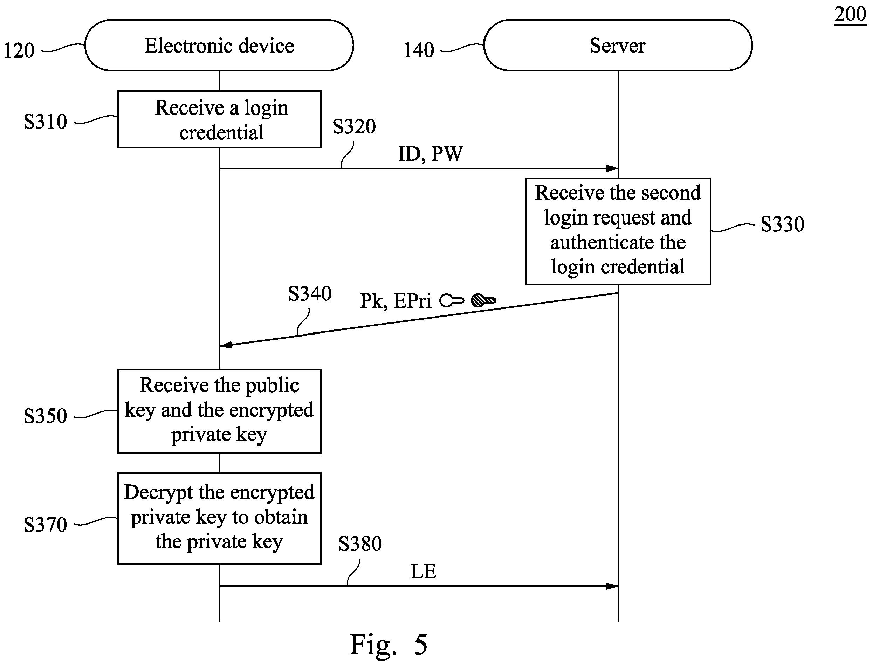

Fig. 5 shows login steps S310 to S370 of the communication method 200 in accordance with an embodiment of the disclosure. In an embodiment, the electronic device 120 shown in Fig. 5 can be the same device as the electronic device 120 shown in Fig. 4 (for example, they are both user's notebook computers). In another embodiment, the electronic device 120 shown in Fig. 5 and the electronic device 120 shown in Fig. 4 are different electronic devices. For example, the electronic device shown in FIG. 4 is the user's own notebook computer (a first electronic device) that the user utilizes to register during the registration process and the electronic device shown in FIG. 5 is a public computer (a second electronic device) that the user utilizes to log in during the login process.

In step S310, the processor 122 of the electronic device 120 receives a login credential. In an embodiment, the login credential may include a user name ID and a user password PW. For example, the user may browse a login interface of communication software on a browser through the electronic device 120, and input the user name ID and the user password PW on the login interface to send a second login request. If the user who logs in to the communication software and the user who registers the communication software are the same user, then the user name ID and the user password PW inputted in step S310 and step S210 should be the same. If the user has set a passphrase, the passphrase inputted in these two steps should also be the same.

In step S320, the processor 122 of the electronic device 120 transmits the login credential to the server 140 through the communication circuit 124. The login credential may include the user name ID and the user password PW.

In step S330, the processor 142 in the server 140 may receive the second login request from the electronic device 120 through a communication element (such as the network interface circuit 144), and authenticate the login credential sent from the electronic device 120 corresponding to the second login request. If the authentication of the login credential is determined to be correct, step S340 is executed so that the electronic device 120 can receive a public key Pk and an encrypted private key EPri from the server 140 based on the authentication result of the server 140. If authentication of the login credential is determined to be incorrect, the notification information is sent to inform the electronic device 120 that the user is unable to log in and the process is ended.

In step S340, the server 140 sends the public key Pk and the encrypted private key EPri to the electronic device 120. Since the encrypted private key EPri is sent in the network, rather than the private key Pri, a third party can only obtain the encrypted private key EPri and not the private key Pri even if the third party perform interception during the transmission process.

In step S350, the processor 122 of the electronic device 120 receives the public key Pk and the encrypted private key EPri from the server 140 based on a predetermined storing policy. Since the communication software can be implemented as a mobile phone application or a web application, different policies for storing keys need to be set. Hence, the processor 122 of the electronic device 120 can set different predetermined storing policies depending on different implementation methods of the communication software.

For example, when the user logs in to the communication software through the browser on the electronic device 120 (such as a public computer or a personal computer), the private key Pri of the user or the public key Pk cannot be stored by the browser because the browser does not have a continuously existing storage space. In another example, even though the browser has its own storage space allocated by the device, the private key Pri still cannot be stored in the browser's storage space, because the user may log in to the web version of the communication software through a different computer in a different place (such as a public computer in a library or in an airport), and such a computer has a low level of security. As a result, the communication system 100 does not store the private key Pri of the user or important information in the browser's storage space. As a result, the storing policy for the communication software implemented as the web application has to download the encrypted private key EPri and the public key Pk again from the server. That is, even though the browser may have transmitted the public key Pk and the encrypted private key EPri to the server 140 before, it may receive the public key Pk and the encrypted private key EPri again after the user logs in to the communication software. In an embodiment, the public key Pk and the encrypted private key EPri are temporarily stored in the storage medium 126. When the electronic device 120 receives a logout request (for example, the user presses the logout button on the web page), the electronic device 120 deletes the public key Pk and the encrypted private key EPri stored in the storage medium 126. In addition, if the private key Pri (without encryption) is temporarily stored in the storage medium 126, the private key Pri will also be deleted.

In an embodiment, the predetermined storing policy may be set such that the electronic device 120 deletes the public key Pk and the encrypted private key EPri from the storage medium 126 after decrypting the private key Pri (step S370) and the private key Pri temporarily stored in the storage medium 126 after receiving the logout request.

As described above, by sending the encrypted private key EPri to the electronic device 120, the user is allowed to securely receive the encrypted private key EPri among different platforms. That is, the user can use different electronic devices and/or different browsers to receive the encrypted private key EPri from the server with high security and privacy. After receiving the encrypted private key from the server, the encrypted private key EPri can be decrypted based on the password which the user inputted to obtain the private key Pri (step S370). As a result, the problem with the web version of the communication software having difficulty or not securely storing the private key Pri is resolved.

Furthermore, even if the user logs in to the web version of the communication software through a public computer, the public computer will not retain the private key Pri, the public key Pk, and the encrypted private key EPri of the user when the user logs out of the communication software. The security of the web version of the communication software is thus considerably increased.

In another embodiment, when the user logs in to the mobile version of the communication software (such as a native application on a cell phone) on the electronic device 120, the predetermined storing policy is to download the public key Pk and the encrypted private key EPri from the server 140 and to store the public key Pk and the encrypted private key EPri in a storage space of the electronic device 120. This is because a cell phone device can allocate a storage space for the native application installed thereon (e.g. the mobile version of the communication software). In the present embodiment, when the user logs in to the communication software on the electronic device 120 again, the electronic device 120 can directly obtain the public key Pk and the encrypted private key EPri from the storage space to decrypt the private key Pri and may not need to download the public key Pk and the encrypted private key EPri from the server 140 again. In one embodiment, even if the user logs out of the communication software on the electronic device 120, the public key Pk and the encrypted private key EPri in the storage space may not be deleted.

In the following steps, since the electronic device 120 needs to generate a secrete key through the password, the electronic device 120 receives the password inputted by the user. In some embodiments, the password may refer to the user password PW or a passphrase.

In step S370, the processor 122 substitutes the password with the one-way hash algorithm again to generate the secrete key, and substitutes the secrete key and the encrypted private key EPri with the symmetric-key algorithm to decrypt the encrypted private key EPri so as to obtain the private key Pri.

In one embodiment, if the password inputted by the user is the same as the password inputted by the user in step S270, the processor 122 substitutes the password with the one-way hash algorithm again to generate the secrete key that is the same as the secrete key generated in step S270. Hence, after the processor 122 substitutes the secrete key and the encrypted private key EPri with the symmetric-key algorithm, the private key Pri can be obtained. Conversely, if the password inputted by the user is different from the password inputted by the user in step S270, the secret key generated through substituting the password with the one-way hash algorithm by the processor 122 is different from the key generated in step S270. As a result, the private key Pri cannot be decrypted after the processor 122 substitutes the key and the encrypted private key EPri with the symmetric-key algorithm.

In step 380, the processor 122 of the electronic device 120 can establish an end-to-end encryption communication channel LE with another electronic device based on the private key Pri and the public key Pk through the communication circuit 124.

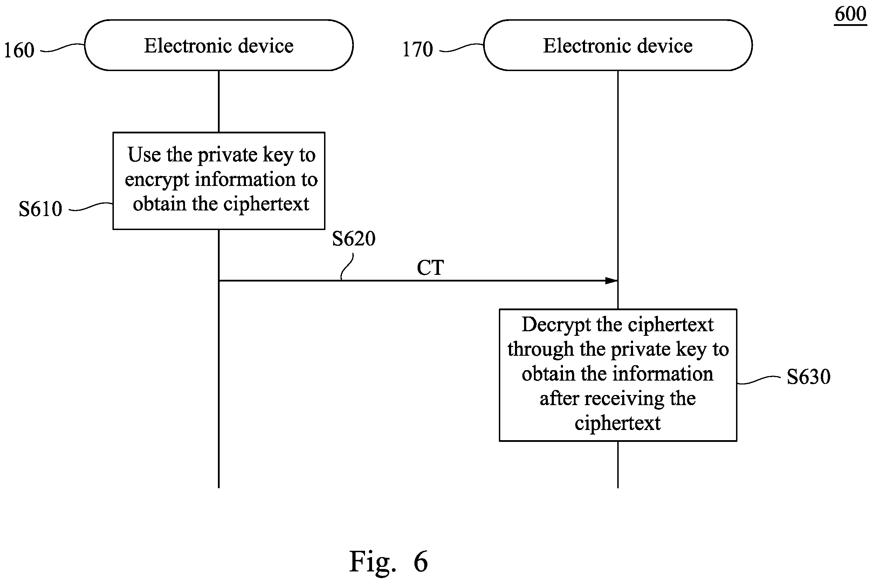

Fig. 6 shows a communication method 600 in accordance with an embodiment of the disclosure. In an embodiment, each of an electronic device 160 and an electronic device 170 can execute the above steps S310-S370 to finally decrypt the same private key Pri. For example, in Fig. 6, under the circumstances that the electronic device 160 and the electronic device 170 have already decrypted the same private key Pri, the electronic device 160 can obtain ciphertext CT (step S610) after using the private key Pri to encrypt information (this encryption method may adopt a currently available encryption technology), and send the ciphertext CT to the electronic device 170 (step S620). After the electronic device 170 receives the ciphertext CT, the electronic device 170 decrypts the ciphertext CT through the private key Pri to obtain the information (step S630). In this manner, the information is securely transmitted by using the end-to-end encryption communication channel LE between the electronic device 160 and the electronic device 170.

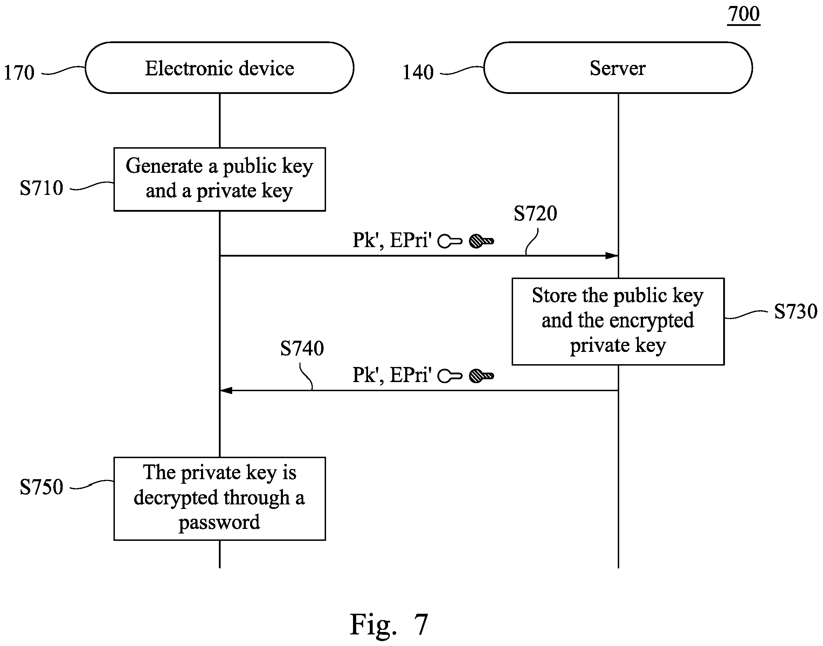

Fig. 7 shows a communication method 700 according to another embodiment of the present disclosure. In an embodiment, the electronic device 170 itself can generate a public key Pk' and a private key Pri' different from those of the electronic device 160 (step S710), and send the public key Pk' and an encrypted private key EPri' to the server 140 (step S720). The server 140 is configured to store the public key Pk' and the encrypted private key EPri' (step S730). Therefore, the electronic device 170 does not need to store the public key Pk' and the private key Pri' to reduce the risk of a third party stealing the public key Pk' and the private key Pri' from the electronic device 170. When the electronic device 170 intends to transmit information to the electronic device 160 securely, the public key Pk' and the encrypted private key EPri' can be obtained from the server 140 again (step S740), and the private key Pri' is decrypted through a password inputted by a user (step S750). In this manner, the electronic device 170 can obtain the public key Pk' and the private key Pri'.

In this example, a subsequent encryption and decryption process can be performed. For example, the electronic device 170 encrypts the information through a public key Pk of the electronic device 160, and then sends ciphertext generated after encryption to the electronic device 160. After the electronic device 160 receives the ciphertext, the electronic device 160 can decrypt the information through its own private key Pk. In addition, when another information is required to be sent to the electronic device 170 securely from the electronic device 160, the electronic device 160 can encrypt such information through the public key Pk' of the electronic device 170, and send ciphertext generated after encryption to the electronic device 170. After the electronic device 170 receives the ciphertext, the electronic device 170 can decrypt such information through its own private key Pk'. However, the implementation method of end-to-end encryption is not limited to this.

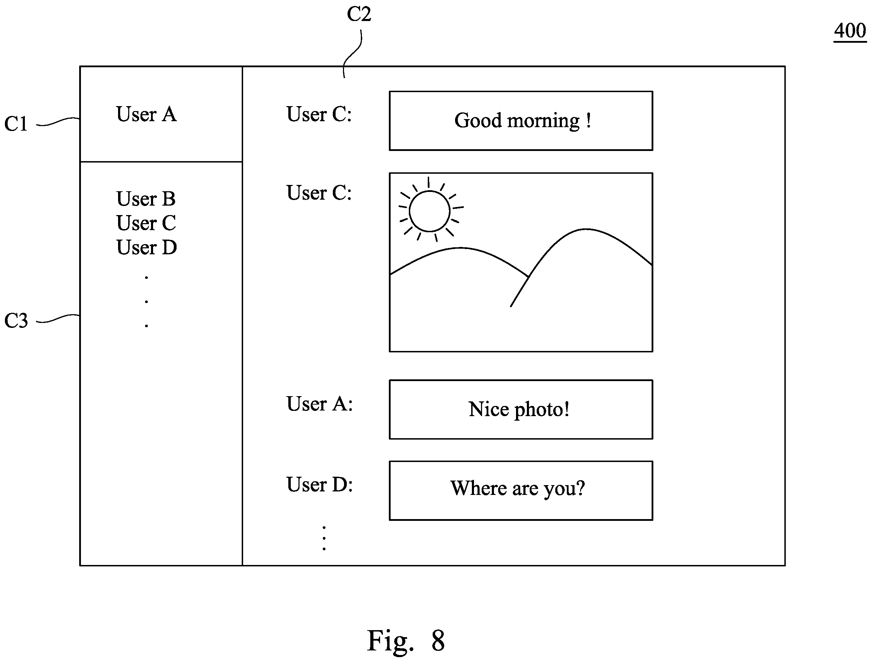

Fig. 8 shows the operation interface 400 in accordance with an embodiment of the disclosure. After a user A logs in to a web version of communication software, a user's name or code will be displayed in a user field C1. The user A can view dialog information, photos, or audio and video files sent by each contact in a dialog field C2. The user A can also view an on-line or off-line situation of each contact (whether the the web version of the communication software of a contact is opened or not) in a contact field C3. The user A can also click an entry of a contact (such as contact C) to open a dialog. An end-to-end encryption communication channel LE between an electronic device of the user A and an electronic device of the user C can be established, so that the electronic device of the user C decrypts information after the electronic device of the user A sends encrypted information to the electronic device of the user C to increase the security of information transmission.

In summary, the electronic device, server, communication system, and communication method according to the present disclosure can securely store the encrypted private key in the server to allow the communication software of the cell phone or the web version of the communication software to obtain the public key and the encrypted private key through a network. The problem with the web version of the communication software having difficulty storing the private key is thus resolved. In addition, setting the method for storing the public key and the encrypted private key based on the predetermined storing policy, deletes the private key temporarily stored in the storage medium of the electronic device when the user logs out of the web version of the communication software. This prevents the third party from obtaining the private key, thus further increasing the security of the communication system.

**Claims**

1. An electronic device (120) comprising:

   a processor (122); and
   storage medium (126) coupled to the processor, the storage medium being configured to store a plurality of instructions to allow the processor to perform the steps of:

      generating a public key (Pk) and a private key (Pri);
      encrypting the private key; and
      sending the public key (Pk) and the encrypted private key (EPri) to a server (140) through a network (150) for storage.

2. The electronic device of claim 1, wherein the processor is configured to receive the public key and the encrypted private key from the server through a storing policy and to decrypt the encrypted private key.

3. The electronic device of claim 1 or 2, wherein the processor is further configured to transmit a login credential to the server;
   wherein the electronic device is further configured to receive the public key and the encrypted private key from the server based on an authentication result of the server.

4. The electronic device of claim 1 or 2, wherein the processor is further
   configured to transmit a login credential to the server;
   wherein the electronic device is configured to download the public key and the encrypted private key from the server and to store the public key and the encrypted private key based on an authentication result of the server.

5. The electronic device of claim 1 or 2, wherein the processor is further configured to transmit a login credential to the server and the login credential comprises a user name and a user password;
   wherein the processor is further configured to generate the encrypted private key through the user password.

6. The electronic device of claim 1 or 2, wherein the processor is further configured to transmit a login credential to the server, the login credential comprises a user name and a user password, the processor is further configured to set a passphrase different than the user password, and the processor is further configured to generate the encrypted private key through the passphrase.

7. A method for communicating with a server (140) through a network (150), the method comprises:

generating, by an electronic device (120), a public key (Pk) and a private key (Pri);
encrypting, by the electronic device (120), the private key; and
sending, by the electronic device (120), the public key (Pk) and the encrypted private key (EPri) to the server (140) through the network (150) for storage.

8. The method of claim 7, further comprising:

downloading, by another electronic device, the encrypted private key (EPri) from the server (140).

9. The method of claim 7 or claim 8, further comprising:

transmitting, by the electronic device (120), a login credential to the server (140); and
if an authentication result of the login credential is determined to be correct, downloading, by the electronic device (120), the encrypted private key (EPri) from the server (140).

10. The method of claim 9, wherein the login credential comprises a user name and a user password, and the communication method comprises:

encrypting the private key by the user password.

11. The method of claim 9, wherein the login credential comprises a user name and a user password, and the communication method comprises:

encrypting the private key by a passphrase different than the user password.

12. The method of claim 7, claim 8, or claim 9 further comprising:

substituting, by the electronic device, a password to a one-way hash algorithm to generate a secrete key; and
encrypting the private key by the secrete key to generate the encrypted private key.

13. The method of claim 12, wherein the password comprises a user password or a passphrase different than the user password.

Fig. 1

EP 3 299 990 A1

Fig. 2

EP 3 299 990 A1

Fig. 3

EP 3 299 990 A1

120 — ( Electronic device )     140 — ( Server )

S210 — | Receive a login credential |

S220

ID, PW ⟶

| Receive the first login request and authenticate the login credential | — S230

S240

⟵ DAT

S260 — | Generate the public key and a private key |

Pk, Pri  ⌐━

S270 — | Encrypt the private key |

S280

Pk, EPri  ⌐━ ⟶

| Store EPri and Pk | — S290

Fig. 4

EP 3 299 990 A1

Fig. 5

EP 3 299 990 A1

160 — Electronic device

170 — Electronic device

600

S610 — Use the private key to encrypt information to obtain the ciphertext

S620

CT

Decrypt the ciphertext through the private key to obtain the information after receiving the ciphertext — S630

Fig. 6

EP 3 299 990 A1

EP 3 299 990 A1

700

| 170 — | Electronic device | | 140 — | Server |
|---|---|---|---|---|

S710 — Generate a public key and a private key

S720

Pk', EPri' ⌒ ⬤⟶

Store the public key and the encrypted private key — S730

S740

Pk', EPri' ⌒ ⬤

S750 — The private key is decrypted through a password

Fig. 7

EP 3 299 990 A1

C2

400

C1 — | User A

C3 — | User B
User C
User D
.
.
.

User C: | Good morning !

User C:

User A: | Nice photo!

User D: | Where are you?

.
.
.

Fig. 8

Europäisches
Patentamt

European
Patent Office

Office européen
des brevets

## EUROPEAN SEARCH REPORT

Application Number

EP 17 19 2729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 950 523 B1 (BRICKELL ERNIE [US] ET AL) 27 September 2005 (2005-09-27)<br>* figures 2, 4 *<br>* column 3, lines 44-46; 55-67; *<br>* column 4, lines 1-5; 31-34; *<br>* column 5, lines 47-67; *<br>* column 6, lines 1-55; * | 1-13 | INV.<br>G06F21/62<br>H04L9/08<br>H04L29/06<br>H04L9/32 |
| X | US 9 432 346 B2 (MADDEN DAVID H [US]) 30 August 2016 (2016-08-30)<br>* figures 1, 5 *<br>* column 3, lines 65-67; *<br>* column 4, lines 1-2; 42-46; 59-66; *<br>* column 7, lines 31-32; * | 1-13 | |
| A | WO 2015/135063 A1 (QIAN XIAOYAN [CA]) 17 September 2015 (2015-09-17)<br>* figures 1, 2, 4 *<br>* paragraphs [0036], [0037], [0038] *<br>* paragraphs [0046], [0052], [0062] * | 1-13 | |
| A | EP 1 501 238 A1 (EISST LTD [GB]) 26 January 2005 (2005-01-26)<br>* figures 6, 8 *<br>* paragraph [0013] - paragraph [0023] * | 1-13 | TECHNICAL FIELDS SEARCHED (IPC)<br><br>G06F<br>H04L |

The present search report has been drawn up for all claims

| Place of search | Date of completion of the search | Examiner |
|---|---|---|
| Munich | 1 November 2017 | Madzharova, Violeta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 19 2729

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2017

| Patent document cited in search report | | Publication date | Patent family member(s) | | Publication date |
|---|---|---|---|---|---|
| US 6950523 | B1 | 27-09-2005 | NONE | | |
| US 9432346 | B2 | 30-08-2016 | US | 2013007464 A1 | 03-01-2013 |
| | | | US | 2015033020 A1 | 29-01-2015 |
| WO 2015135063 | A1 | 17-09-2015 | CA | 2949847 A1 | 17-09-2015 |
| | | | CN | 106104562 A | 09-11-2016 |
| | | | US | 2017142082 A1 | 18-05-2017 |
| | | | WO | 2015135063 A1 | 17-09-2015 |
| EP 1501238 | A1 | 26-01-2005 | AT | 378747 T | 15-11-2007 |
| | | | DE | 60317498 T2 | 06-11-2008 |
| | | | EP | 1501238 A1 | 26-01-2005 |
| | | | US | 2005033963 A1 | 10-02-2005 |

EPO FORM P0459

For more details about this annex : see Official Journal of the European Patent Office, No. 12/82